# EUROPÄISCHE PATENTANMELDUNG

(11) **EP 4 744 983 A1**
(43) Veröffentlichungstag der Anmeldung: **20.05.2026**
(21) Anmeldenummer: 25209320.8
(22) Anmeldetag: 17.10.2025
(51) Int. Cl.: B60T 13/66, B60T 17/22, B60T 7/04

(54) **BREMSANLAGE FÜR EIN KRAFTFAHRZEUG UND KRAFTFAHRZEUG MIT EINER BREMSANLAGE**

(30) Priorität: 19.11.2024 DE 102024133898
(71) Anmelder: AUDI AG, 85057 Ingolstadt (DE)
(72) Erfinder: Petersen, Krister, Ingolstadt (DE)

(57) **Zusammenfassung**

Die Erfindung betrifft eine Bremsanlage (6) für ein Kraftfahrzeug mit zwei Steuergeräten (16,18), nämlich einem primären Steuergerät (16) und einem sekundären Steuergerät (18). Dabei ist die Bremsanlage (6) derart eingerichtet, dass in einem Aufwach-Modus der Bremsanlage (6) bei einer Eingabe eines Bremsbefehls durch einen Fahrer situationsabhängig, nämlich je nachdem ob eine kritische oder eine unkritische Bremssituation vorliegt, entweder das primäre Steuergerät (16) oder das sekundäre Steuergerät (18) die Generierung einer Bremskraft in Abhängigkeit des eingegebenen Bremsbefehls steuert.

## Beschreibung

Die Erfindung betrifft eine Bremsanlage für ein Kraftfahrzeug. Außerdem betrifft die Erfindung ein Kraftfahrzeug mit einer entsprechenden Bremsanlage.

Die meisten der aktuell verfügbaren Personenkraftwagen weisen eine Betriebsbremse auf, bei der jedem Rad eine hydraulisch angesteuerte Radbremse zugeordnet ist. Bei derartigen Betriebsbremsen wird bei einem Bremsvorgang über ein Hydrauliksystem der Betriebsbremse für die Radbremsen ein Bremsdruck vorgegeben, der dann in der jeweiligen Radbremse in eine vom Bremsdruck abhängige Radbremskraft umgesetzt wird.

In einigen Fällen ist eine derartige Betriebsbremse dabei als sogenannte elektro-hydraulische Bremse ausgestaltet. Bei einer elektro-hydraulischen Bremse wird der Bremsdruck elektrisch geregelt, typischerweise mit Hilfe von elektrisch ansteuerbaren Ventilen und mit Hilfe von elektrischen Hydropumpen im Hydrauliksystem. Die Regelung erfolgt hierbei in Abhängigkeit von Sensorsignalen eines Sensors, mit dem Bremsbefehle eines Fahrers erfasst werden, die dieser durch Betätigung eines Bremspedals vorgibt.

Für den Fall, dass die elektrische Regelung in einer elektro-hydraulischen Bremse ausfällt, ist in elektro-hydraulischen Bremsen typischerweise eine sogenannte mechanisch-hydraulische Rückfallebene realisiert. Dazu ist das Bremspedal an das Hydrauliksystem gekoppelt, so dass durch Betätigung des Bremspedals ein hydraulischer Druck ausgeübt und über das Hydrauliksystem in Bremsdruck umgesetzt werden kann. In der mechanisch-hydraulischen Rückfallebene erfolgt die Regelung des Bremsdrucks dann ohne elektrische Signale, indem die Betätigung des Bremspedals über eine rein mechanisch-hydraulische Kopplung in einen Bremsdruck umgesetzt wird.

Bekannt sind darüber hinaus auch sogenannte elektro-mechanische Bremsen. Eine solche elektro-mechanische Bremse ist beispielsweise in der US 2012/0 118 681 A1 beschrieben.

Aufgabe der vorliegenden Erfindung ist es, eine vorteilhaft ausgestaltete Bremsanlage für ein Kraftfahrzeug und ein vorteilhaft ausgestaltetes Kraftfahrzeug mit einer entsprechenden Bremsanlage zu schaffen.

Diese Aufgabe wird durch eine Bremsanlage mit den Merkmalen des Patentanspruchs 1 und durch ein Kraftfahrzeug mit den Merkmalen des Patentanspruchs 10 gelöst. Die im Hinblick auf die Bremsanlage angeführten Vorteile und bevorzugten Ausgestaltungen sind sinngemäß auch auf das Kraftfahrzeug übertragbar/zu übertragen und umgekehrt. Vorteilhafte Ausgestaltungen mit zweckmäßigen Weiterbildungen der Erfindung sind in den abhängigen Patentansprüchen angegeben.

Die erfindungsgemäße Bremsanlage ist dabei für ein Kraftfahrzeug ausgelegt sowie ausgebildet. Daher ist die Bremsanlage im verbauten oder eingebauten Zustand zweckdienlicherweise Teil eines Kraftfahrzeugs.

Das erfindungsgemäße Kraftfahrzeug wiederum weist eine erfindungsgemäße Bremsanlage auf. Es ist hierbei insbesondere als ein Personenkraftwagen ausgestaltet.

Die Bremsanlage, also die erfindungsgemäße Bremsanlage, ist ihrerseits insbesondere für einen Personenkraftwagen ausgelegt sowie ausgebildet. Außerdem weist sie zweckdienlicherweise eine und vorzugsweise lediglich eine Betriebsbremse auf, die insbesondere nach Art einer sogenannten Brake-by-Wire-Bremse ausgestaltet ist.

Weiter weist die Bremsanlage und insbesondere die Betriebsbremse eine Eingabevorrichtung mit einem Bedienelement auf, über welche Bremsbefehle von einem Fahrer eingebbar sind, nämlich durch eine manuelle Bedienung des Bedienelements. Außerdem weist die Eingabevorrichtung zweckdienlicherweise zumindest einen dem Bedienelement beigeordneten Bedienelement-Sensor auf zur sensorischen Erfassung von eingegebenen Bremsbefehlen.

Das Bedienelement ist hierbei typischerweise als sogenanntes Bremspedal ausgestaltet, welches üblicherweise im verbauten Zustand der Bremsanlage in einem Fußraum eines Kraftfahrzeugs angeordnet ist und mit einem Fuß betätigt werden kann. Alternativ ist das Bedienelement für eine Bedienung per Hand ausgebildet und im verbauten Zustand der Bremsanlage beispielsweise am oder im Bereich eines Lenkrades positioniert.

Teil der Bremsanlage und insbesondere der Betriebsbremse ist weiterhin eine elektrisch steuerbare Bremsvorrichtung zur Generierung von Bremsmomenten bzw. von Bremskräften sowie eine Steuervorrichtung zur Steuerung der Bremsvorrichtung, nämlich zweckdienlicherweise mittels elektrischer Signale, also elektrischer Steuersignale. Die Steuerung erfolgt dabei insbesondere in Abhängigkeit eingegebener und sensorisch erfasster Bremsbefehle. D. h., dass die Steuervorrichtung zweckdienlicherweise eingerichtet ist, sensorisch erfasste Bremsbefehle weiterzuverarbeiten und basierend darauf elektrische Steuersignale zur Steuerung der Bremsvorrichtung zu generieren. Hierbei ist die elektrisch steuerbare Bremsvorrichtung typischerweise Teil der zuvor genannten Betriebsbremse der Bremsanlage. Des Weiteren weist die Steuervorrichtung zwei Steuergeräte auf, nämlich ein primäres Steuergerät und ein sekundäres Steuergerät.

Außerdem weist die Bremsanlage und insbesondere die Betriebsbremse eine Sensoreinrichtung zur Generierung von Sensorsignalen auf, mittels derer eine Bremssituation ermittelbar ist. D. h., dass mittels der Sensoreinrichtung zweckdienlicherweise die Situation abbildbar ist, in der ein Fahrer einen Bremsbefehl eingibt.

Eingerichtet ist die Bremsanlage und insbesondere die Betriebsbremse der Bremsanlage weiter für zumindest drei Betriebsmodi, nämlich einen Schlaf-Modus, einen Aufwach-Modus und einen Wach-Modus. Der Wach-Modus ist dabei zweckdienlicherweise für einen Fahrbetrieb ausgelegt. D. h., dass der Wach-Modus im verbauten Zustand der Bremsanlage insbesondere dann aktiv oder aktiviert ist, wenn das Kraftfahrzeug, in dem die Bremsanlage verbaut ist, aktiviert ist, wenn also das Kraftfahrzeug gestartet wurde und somit für einen Fahrbetrieb bereit ist. Der Schlaf-Modus ist dagegen zweckdienlicherweise ausgelegt für längere Phasen einer Nichtnutzung der Bremsanlage oder zumindest der Betriebsbremse der Bremsanlage. D. h., dass der Schlaf-Modus im verbauten Zustand der Bremsanlage insbesondere dann aktiv oder aktiviert ist, wenn das Kraftfahrzeug deaktiviert ist, wenn also das Kraftfahrzeug abgestellt wurde. Der Aufwach-Modus wiederum ist zweckdienlicherweise aktiv oder aktiviert in einer Zwischenzeit zwischen einem Betrieb der Bremsanalage im Schlaf-Modus und einem Betrieb der Bremsanlage im Wach-Modus. Der Aufwach-Modus ist daher insbesondere ein Übergangsbetriebsmodus.

Üblicherweise ist weiter der Schlaf-Modus derart gestaltet, dass in dem Schlaf-Modus keines der zwei Steuergeräte aktiv oder aktiviert ist, also weder das primäre noch das sekundäre. Es werden daher im Schlaf-Modus durch diese insbesondere keine Auswertungen vorgenommen, keine Berechnungen und/oder es werden keine elektrischen Steuersignale generiert. Die beiden Steuergeräte schlafen also quasi.

Im Wach-Modus dagegen sind zweckdienlicherweise beide Steuergeräte, also das primäre und das sekundäre, aktiv oder aktiviert, sie sind also quasi wach. Es werden daher im Wach-Modus typischerweise eingegebene Bremsbefehle sensorisch erfasst und die sensorisch erfassten Bremsbefehle werden dann vorzugsweise jeweils von beiden Steuergeräten weiterverarbeitet, wobei insbesondere in Abhängigkeit der sensorisch erfassten Bremsbefehle elektrische Steuersignale zur Steuerung der elektrisch steuerbaren Bremsvorrichtung generiert werden.

Auch da im Falle typischer Ausgestaltungsvarianten für den Schlaf-Modus und den Wach-Modus ein Wechsel vom Schlaf-Modus in den Wach-Modus üblicherweise nicht abrupt erfolgen kann, ist die Bremsanlage, so wie bereits dargelegt, zudem eingerichtet für den Aufwach-Modus und somit insbesondere für einen Übergang vom Schlaf-Modus in den Wach-Modus mit einem Zwischenbetrieb im Aufwach-Modus, in dem beiden Steuergeräte quasi aufwachen.

In diesem Aufwach-Modus führen vorzugsweise beide Steuergeräte jeweils eine Start-Prozedur aus, wobei typischerweise eine Diagnose-Prozedur Teil einer entsprechenden Start-Prozedur ist. Die Bremsanlage und insbesondere die Betriebsbremse ist dabei weiter bevorzugt derart eingerichtet, dass im Aufwach-Modus das primäre Steuergerät eine primäre Start-Prozedur und das sekundäre Steuergerät eine sekundäre Start-Prozedur ausführt, wobei die sekundäre Start-Prozedur in kürzerer Zeit abgeschlossen ist als die primäre Start-Prozedur.

Davon abgesehen ist die Bremsanlage derart eingerichtet, dass im Aufwach-Modus mittels der zuvor genannten Sensoreinrichtung Sensorsignale generiert werden und dass diese Sensorsignale durch die zuvor beschriebene Steuervorrichtung auswertet werden, wobei basierend auf diesen Sensorsignalen ermittelt wird, ob eine kritische oder eine unkritische Bremssituation vorliegt. Erfolgt dann weiter im Aufwach-Modus eine Eingabe eines Bremsbefehls, so steuert das primäre Steuergerät der Steuervorrichtung in Abhängigkeit des eingegebenen Bremsbefehls die Bremsvorrichtung zur Generierung einer Bremskraft an, wenn eine unkritische Bremssituation vorliegt, und anderenfalls, wenn also eine kritische Bremssituation vorliegt, steuert das sekundäre Steuergerät der Steuervorrichtung in Abhängigkeit des eingegebenen Bremsbefehls die Bremsvorrichtung zur Generierung einer Bremskraft an.

Diese situationsabhängige, also von der Bremssituation abhängige, Aufgabenaufteilung auf das primäre Steuergerät oder das sekundäre Steuergerät erfolgt hierbei bevorzugt lediglich im Aufwach-Modus und in keinem weiteren Betriebsmodus.

Als eine unkritische Bremssituation gilt dabei zweckdienlicherweise eine Situation, in der ein Kraftfahrzeug, welches die Bremsanlage aufweist, stillsteht und nicht wegzurollen oder wegzurutschen droht. Als kritische Situation gilt in diesem Fall dann zweckdienlicherweise eine Situation, in der das entsprechende Kraftfahrzeug wegzurollen oder wegzurutschen droht, oder eine Situation, in der das entsprechende Kraftfahrzeug bereits wegrollt oder wegrutscht.

Weiter ist die Bremsanlage vorzugsweise derart eingerichtet, dass zumindest im verbauten Zustand der Bremsanlage ein Wechsel vom Schlaf-Modus in den Aufwach-Modus dann erfolgt, wenn das Kraftfahrzeug, in dem die Bremsanlage verbaut ist, gestartet wird oder wenn das zuvor genannte Bedienelement während dem Schlaf-Modus betätigt wird. Zur Erkennung einer solchen Betätigung weist die Bremsanlage typischerweise einen einfachen Sensor auf, der dem Bedienelement beigeordnet ist. Dieser einfache Sensor dient dabei weiter bevorzugt lediglich zur Erkennung, ob das Bedienelement betätigt wird oder nicht. Die Erfassung einer Eingabe eines Bremsbefehls ist damit typischerweise nicht möglich.

Zudem bevorzugt ist der zuvor genannte einfache Sensor Teil einer einfachen Weck-Schaltung, mittels der die Erkennung einer Betätigung des Bedienelements im Schlaf-Modus ermöglicht ist. Die Bremsanlage ist dabei dann derart eingerichtet, dass die Weck-Schaltung bei Ermittlung oder Erkennung einer entsprechenden Betätigung die Bremsanlage in den Aufwach-Modus versetzt. D. h., dass die Weck-Schaltung bei Erkennung einer Betätigung des Bedienelements im Schlaf-Modus insbesondere das primäre Steuergerät und/oder das sekundäre Steuergerät aufweckt.

Die Erfassung einer Eingabe eines Bremsbefehls erfolgt vorzugsweise mittels zumindest eines Bedienelement-Sensors, mit welchem insbesondere eine Position oder Stellung des Bedienelements erfassbar ist, also zum Beispiel die Stellung des zuvor genannten Bremspedals. Weiter bevorzugt ist dieser zumindest eine Bedienelement-Sensor im Schlaf-Modus nicht aktiv oder nicht aktiviert und erfasst daher im Schlaf-Modus keine Eingaben. Im Aufwach-Modus ist der zumindest eine Bedienelement-Sensor dagegen zweckdienlicherweise aktiv oder aktiviert und erfasst somit eingegebene Bremsbefehle.

Bevorzugt sind weiter Ausführungsvarianten, bei denen die zuvor genannte Sensoreinrichtung eine Anzahl Raddrehzahl-Sensoren zur Generierung der Sensorsignale aufweist und bei denen basierend auf den Sensorsignalen der Raddrehzahl-Sensoren ermittelt wird, ob eine kritische oder eine unkritische Bremssituation vorliegt. In einigen Anwendungsfällen bilden zudem die Raddrehzahl-Sensoren die Sensoreinrichtung aus und die Ermittlung, ob eine kritische oder eine unkritische Bremssituation vorliegt, erfolgt in diesen Fällen dann allein auf der Basis der Sensorsignale der Raddrehzahl-Sensoren. Weitere Sensorsignale von anderen Sensoren werden dann nicht berücksichtigt. In anderen Anwendungsfällen weist die Sensoreinrichtung alternativ oder zusätzlich zu der Anzahl Raddrehzahl-Sensoren eine Anzahl Beschleunigungssensoren auf und in diesen Fällen wird dann dementsprechend alternativ bzw. zusätzlich basierend auf den Sensorsignalen der Beschleunigungssensoren ermittelt, ob eine kritische oder eine unkritische Bremssituation vorliegt.

Zweckdienlich ist es außerdem, wenn die zuvor genannte Betriebsbremse der Bremsanlage als eine sogenannte elektro-hydraulische Bremse ausgebildet ist und wenn diese die einzige Betriebsbremse der Bremsanlage ist. Typischerweise weist die Bremsanlage zudem noch eine Feststellbremse, beispielsweise eine rein mechanische Feststellbremse, auf und in einigen Anwendungsfällen außerdem eine Nutzbremse, auch Rekuperationsbremse genannt.

Ist nun die Betriebsbremse der Bremsanlage als eine solche elektro-hydraulische Bremse ausgebildet, so weist die Bremsanlage und insbesondere die elektrisch steuerbare Bremsvorrichtung typischerweise eine Anzahl Radbremsen auf sowie ein elektrisch steuerbares Hydrauliksystem. Dabei ist dann weiter die Bremsanlage derart ausgestaltet, dass mittels des Hydrauliksystems in jeder Radbremse ein hydraulischer Druck vorgebbar ist zur Generierung einer Radbremskraft. Alle Radbremskräfte zusammen ergeben dabei dann eine Bremskraft, also eine Gesamtbremskraft, die mittels der Bremsanlage generiert wird.

Weiter bevorzugt weist das Hydrauliksystem eine elektrisch steuerbare Druckregeleinrichtung auf. Typischerweise wird diese Druckregeleinrichtung dabei durch eine Anzahl elektrisch steuerbarer Einheiten ausgebildet, nämlich insbesondere durch Ventile und Hydraulikpumpen. Hierbei weist die Druckregeleinrichtung weiterhin üblicherweise einem primären Teil und einen sekundären Teil auf, wobei der primäre Teil signaltechnisch an das primäre Steuergerät angebunden ist und wobei der sekundäre Teil signaltechnisch an das sekundäre Steuergerät angebunden ist.

Außerdem bevorzugt ist dann die Bremsanlage derart eingerichtet, dass einerseits mittels des primären Steuergeräts sowie mittels des primären Teils der Druckregeleinrichtung Radbremskräfte vorgebbar sind und andererseits mittels des sekundären Steuergeräts sowie mittels des sekundären Teils der Druckregeleinrichtung Radbremskräfte vorgebbar sind. Auf diese Weise ist in der Bremsanlage unter anderem auch eine Art Redundanz geschaffen.

Das primäre Steuergerät und der primäre Teil der Druckregeleinrichtung sind weiter bevorzugt Bestandteile eines primären Bremssubsystems. Analog sind das sekundäre Steuergerät und der sekundäre Teil der Druckregeleinrichtung bevorzugt Bestandteile eines sekundären Bremssubsystems der Bremsanlage. Mit den beiden Bremssubsystemen, also dem primären und dem sekundären Bremssubsystem, ist dann in der Bremsanlage unter anderem auch eine Redundanz geschaffen, wobei einerseits mittels des primären Steuergeräts sowie mittels des primären Teils der Druckregeleinrichtung die Bremsdrücke in den Bremszylindern vorgebbar sind und wobei andererseits mittels des sekundären Steuergeräts sowie mittels des sekundären Teils der Druckregeleinrichtung die Bremsdrücke in den Bremszylindern vorgebbar sind.

Von Vorteil ist es außerdem, wenn die beiden zuvor beschriebenen Bremssubsysteme unterschiedlich ausgestaltet sind. Dabei ist dann das primäre Bremssubsystem bevorzugt für eine komfortablere Bremskrafterzeugung und/oder Bremskraftregelung ausgelegt als das sekundäre Bremssubsystem.

Außerdem bevorzugt ist das sekundäre Bremssubsystem für ein schnelleres Aufwachen ausgelegt als das primäre Bremssubsystem. D.h., dass nach einem Wechsel vom Schlaf-Modus in den Aufwach-Modus das sekundäre Bremssubsystem bevorzugt schneller bereit ist Radbremskräfte in Abhängigkeit eines eingegebenen Bremsbefehls vorzugeben als das primäre Bremssubsystem. Dafür ist das primäre Bremssubsystem bevorzugt derart ausgebildet, dass damit komfortabler und insbesondere akustisch angenehmer Radbremskräfte in Abhängigkeit eines eingegebenen Bremsbefehls vorgebbar sind als mit dem sekundären Bremssubsystem.

Sind die beiden Bremssubsysteme nun in der zuvor beschrieben Art ausgestaltet, dann folgt daraus, dass im Aufwach-Modus bei einer Eingabe eines Bremsbefehls das schneller verfügbare sekundäre Bremssubsystem zur Generierung einer Bremskraft genutzt wird, wenn die Bremssituation kritisch ist, und dass das später verfügbare aber dafür komfortablere primäre Bremssubsystem zur Generierung einer Bremskraft genutzt wird, wenn die Bremssituation nicht kritisch ist.

Hierbei sei auch nochmals auf die vorherigen Ausführungen verwiesen, wonach bevorzugt beide Steuergeräte im Aufwach-Modus jeweils eine Start-Prozedur ausführen, also typischerweise das primäre Steuergerät die primäre Start-Prozedur und das sekundäre Steuergerät die sekundäre Start-Prozedur. Dabei werden dann zweckdienlicherweise mittels oder durch die entsprechenden Start-Prozeduren die jeweiligen Bremssubsysteme in ihren betriebsbereiten Zustand versetzt und es werden insbesondere auch die entsprechenden Teile der Druckregeleinrichtung in ihren Betriebsbereiten Zustand versetzt.

Weiter sind üblicherweise die beiden Teile der Druckregeleinrichtung, also der primäre und der sekundäre Teil, unterschiedlich ausgestaltet, was sich typischerweise auf die Dauer auswirkt, in der der Betriebsbereite Zustand erreichbar ist und somit auch auf die Dauer der jeweiligen Start-Prozedur. D. h., dass in einigen Ausführungsvariante die sekundäre Start-Prozedur zumindest auch deshalb in kürzerer Zeit ausgeführt wird als die primäre Start-Prozedur, weil der sekundäre Teil der Druckregeleinrichtung in kürzerer Zeit in den betriebsbereiten Zustand versetzbar ist als der primäre Teil der Druckregeleinrichtung. Dabei weist dann beispielsweise der primäre Teil der Druckregeleinrichtung eine Anzahl linearer Aktuatoren auf, wohingegen der sekundäre Teil der Druckregeleinrichtung keinen linearen Aktuator aufweist.

Davon unabhängig sind die beiden Steuergeräte vorzugsweise für einen Signal- und/oder Datenaustausch miteinander verbunden, beispielsweise über einen Feldbus oder Datenbus. Mittel der Verbindung sowie eines entsprechenden Signal- und/oder Datenaustauschs im Betrieb ist weiter bevorzugt sichergestellt, dass im Falle eines Fehlers oder Defekts im primären Steuergerät das sekundäre Steuergerät quasi die Aufgaben des primären Steuergeräts übernimmt.

In den meisten Anwendungsfällen ist außerdem bei der Bremsanlage und insbesondere bei der Betriebsbremse auf eine mechanisch-hydraulische Rückfallebene, eine mechanisch-pneumatische Rückfallebene und/oder eine rein mechanische Rückfallebene verzichtet.

Von Vorteil ist es zudem, wenn die Bremsanlage und insbesondere die Betriebsbremse derart eingerichtet ist, dass bei einer Eingabe eines Bremsbefehls im Wach-Modus der Bremsanlage, also in einem Betriebsmodus für einen Fahrbetrieb, das primäre Steuergerät das Hydrauliksystem derart ansteuert, dass in Abhängigkeit des Bremsbefehls ein Basisdruck in jeder Radbremse hydraulisch vorgegeben wird, und dass das sekundäre Steuergerät das Hydrauliksystem im Bedarfsfall derart ansteuert, dass in jeder Radbremse der Basisdruck individuell variiert wird, um hierdurch beispielsweise eine ABS-Funktion (ABS: Antiblockiersystem) und/oder eine ESP-Funktion (ESP: Elektronisches Stabilitäts-Programm), also eine Fahrdynamikregelung, zu realisieren.

Üblicherweise ist die Bremsanlage und insbesondere die Betriebsbremse außerdem derart eingerichtet, dass im Schlaf-Modus eine Versorgung des primären Steuergeräts mit elektrischer Energie deaktiviert ist. In vorteilhafter Weiterbildung der Bremsanlage und insbesondere der Betriebsbremse erfolgt dann nach einem Wechsel in den Aufwach-Modus eine Reaktivierung der Versorgung des primären Steuergeräts durch das sekundäre Steuergerät.

Weitere Vorteile, Merkmale und Einzelheiten der Erfindung ergeben sich aus den Ansprüchen, der nachfolgenden Beschreibung bevorzugter Ausführungsformen sowie anhand der schematischen Zeichnungen. Dabei zeigen:
- Fig. 1: in einer vereinfachten Seitenansicht ein Kraftfahrzeug mit einer Bremsanlage; und
- Fig. 2: in einer vereinfachten Blockschaltbilddarstellung das Kraftfahrzeug mit der Bremsanlage.

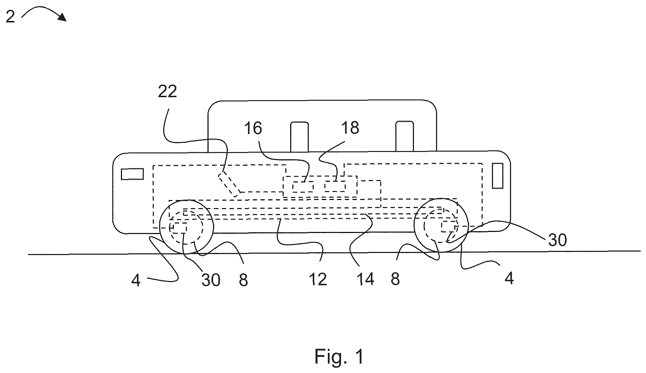

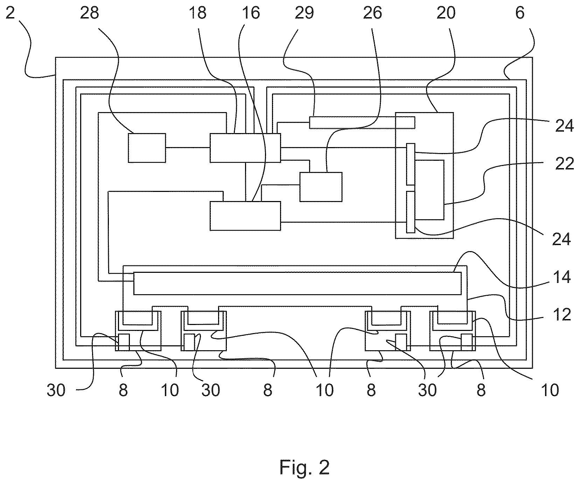

Ein nachfolgend exemplarisch beschriebenes Kraftfahrzeug 2 ist in Fig. 1 in einer Seitenansicht und in Fig. 2 in einer Blockschaltbilddarstellung schematisch dargestellt. Es ist als ein Personenkraftwagen mit vier Rädern 4 ausgebildet und weist eine Bremsanlage 6 auf, mittels der eine Bremskraft generierbar ist, beispielsweise um das Kraftfahrzeug 2 abzubremsen oder an seiner Position zu halten. Die Bremsanlage 6 weist dabei eine nachfolgend näher beschriebene Betriebsbremse auf, welche als eine sogenannte elektro-hydraulische Bremse ausgebildet ist. Zudem weist die Bremsanlage 6 noch eine nicht dargestellte Feststellbremse auf.

Im Ausführungsbeispiel weist die Bremsanlage 6 und insbesondere die Betriebsbremse nun vier Radbremsen 8 auf, wobei jedem Rad 4 des Kraftfahrzeugs 2 eine Radbremse 8 beigeordnet ist. Teil einer jeden Radbremse 8 ist dabei ein Bremszylinder 10, in dem ein Bremsdruck hydraulisch vorgebbar ist. Wird dann ein solcher Bremsdruck vorgegeben, so wird dieser nach an sich bekanntem Prinzip in der entsprechenden Radbremse 8 in eine Radbremskraft umgesetzt. Alle Radbremskräfte zusammen ergeben dann schließlich eine Bremskraft, also eine Gesamtbremskraft.

Teil der Bremsanlage 6 und insbesondere der Betriebsbremse ist weiterhin ein elektrisch steuerbares Hydrauliksystem 12, welches mit den Bremszylindern 10 hydraulisch verbunden ist, so dass über das Hydrauliksystem 12 Bremsdrücke in den Bremszylindern 10 vorgebbar sind. Hierbei weist das Hydrauliksystem 12, also das elektrisch steuerbare Hydrauliksystem 12, eine nicht explizit dargestellte Anzahl elektrisch steuerbarer Einheiten, insbesondere Ventile und Hydraulikpumpen, auf, welche eine elektrisch steuerbare Druckregeleinrichtung 14 des Hydrauliksystems 12 ausbilden und mittels derer die Bremsdrücke in den Bremszylindern 10 vorgebbar sind.

Die Druckregeleinrichtung 14, also die elektrisch steuerbare Druckregeleinrichtung 14, weist im Ausführungsbeispiel weiter zwei nicht explizit dargestellte Teile auf, nämlich einem primären Teil und einen sekundären Teil. Dabei sind die Einheiten, also die elektrisch steuerbaren Einheiten, des primären Teils mit einem primären Steuergerät 16 signaltechnisch verbunden und die Einheiten des sekundären Teils mit einem sekundären Steuergerät 18.

Das primäre Steuergerät 16 und der primäre Teil der Druckregeleinrichtung 14 sind weiter Bestandteile eines primären Bremssubsystems. Analog sind das sekundäre Steuergerät 18 und der sekundäre Teil der Druckregeleinrichtung 14 Bestandteile eines sekundären Bremssubsystems der Bremsanlage 6. Mit den beiden Bremssubsystemen, also dem primären und dem sekundären Bremssubsystem, ist dann in der Bremsanlage und insbesondere in der Betriebsbremse unter anderem auch eine Redundanz geschaffen, wobei einerseits mittels des primären Steuergeräts 16 sowie mittels des primären Teils der Druckregeleinrichtung 14 die Bremsdrücke in den Bremszylindern 10 vorgebbar sind und wobei andererseits mittels des sekundären Steuergeräts 18 sowie mittels des sekundären Teils der Druckregeleinrichtung 14 die Bremsdrücke in den Bremszylindern 10 vorgebbar sind.

Des Weiteren weist die Bremsanlage 6 eine Eingabevorrichtung 20 auf, mittels der Bremsbefehle eines nicht mitabgebildeten Fahrers erfassbar sind. Jene Eingabevorrichtung 20 wiederum weist im Ausführungsbeispiel als ein Bedienelement ein Bremspedal 22 auf sowie zwei dem Bremspedal 22 beigeordnete Bremspedal-Sensoren 24 als Bedienelement-Sensoren. Die zwei Bremspedal-Sensoren 24 sind hierbei zur redundanten Erfassung von Bremsbefehlen ausgebildet und beide sind beispielsweise als Positionssensoren ausgestaltet, mit denen die Position oder Stellung des Bremspedal 22 erfassbar ist. Dabei ist einer der Bremspedal-Sensoren 24 signaltechnisch mit dem primären Steuergerät 16 verbunden und der andere mit dem sekundären Steuergerät 18.

Die so ausgestaltete Bremsanlage 6 und insbesondere die Betriebsbremse ist nun derart eingerichtet, dass bei einer Eingabe eines Bremsbefehls durch einen Fahrer in einem Wach-Modus der Bremsanlage, also bei einer Betätigung des Bremspedals 22, die beiden Bremspedal-Sensoren 24 unabhängig voneinander jeweils ein elektrisches Sensor-Signal generieren, welches den Bremsbefehl des Fahrers abbildet. In der Folge steuert dann weiter das primäre Steuergerät 16 den primären Teil der Druckregeleinrichtung 14 derart an, dass in Abhängigkeit des Bremsbefehls ein Basisdruck in jeder Radbremse 8 hydraulisch vorgegeben wird und hierdurch schließlich eine Bremskraft.

Das sekundäre Steuergerät 18 dagegen steuert in diesem Wach-Modus der Bremsanlage den sekundären Teil der Druckregeleinrichtung 14 und somit das Hydrauliksystem 12 bevorzugt lediglich im Bedarfsfall an und zwar derart, dass im Bedarfsfall in jeder Radbremse 8 der Basisdruck individuell variiert wird, nämlich insbesondere um hierdurch eine ABS-Funktion (ABS: Antiblockiersystem) und/oder eine ESP-Funktion (ESP: Elektronisches Stabilitäts-Programm), also eine Fahrdynamikregelung, zu realisieren.

Zwecks Redundanz ist außerdem bevorzugt für jedes der beiden Steuergeräte 16,18 eine eigene Versorgung mit elektrischer Energie realisiert. Dazu weist die Bremsanlage 6 beispielsweise für jedes der beiden Steuergeräte 16,18 zumindest eine eigene Wandler-Schaltung auf, also eine primäre Wandler-Schaltung 26 für das primäre Steuergerät 16 und eine sekundäre Wandler-Schaltung 28 für das sekundäre Steuergerät 18. In vorteilhafter Weiterbildung sind zudem die beiden Wandler-Schaltungen 26, 28 an unterschiedliche nicht mitabgebildete Akkumulatoren angebunden.

Bevorzugt weist die Bremsanlage 6 außerdem keinerlei mechanisch-hydraulische oder rein mechanische Rückfallebene auf. Stattdessen ist die Bremsanlage durch die zuvor beschriebene Ausgestaltung und die dadurch realisierte Redundanz gegen einen Komplettausfall abgesichert.

Der zuvor beschriebene Betriebsmodus der Bremsanlage 6, nämlich der Wach-Modus, ist weiter als Betriebsmodus für den Fahrbetrieb ausgelegt. Die Bremsanlage 6 und insbesondere das Kraftfahrzeug 2 ist dabei derart eingerichtet, dass dieser Wach-Modus deaktiviert ist, wenn das Kraftfahrzeug 2 abgestellt ist, also insbesondere geparkt ist. In diesem Zustand des Kraftfahrzeugs 2 ist dann ein anderer Betriebsmodus aktiviert, nämlich ein Schlaf-Modus.

Die Bremsanlage 6 und insbesondere das Kraftfahrzeug 2 ist dabei im Ausführungsbeispiel derart eingerichtet, dass in diesem Schlaf-Modus unter anderem die Versorgung des Hydrauliksystems 12 mit elektrischer Energie deaktiviert ist. Die Bremsanlage 6 ist somit quasi heruntergefahren. Bevorzugt ist zudem auch die Versorgung des primären Steuergeräts 16 mit elektrischer Energie durch die primäre Wandler-Schaltung 26 deaktiviert.

Weiter ist das Kraftfahrzeug 2 und insbesondere die Bremsanlage 6 derart eingerichtet, dass bei einer Betätigung des Bremspedals 22 im Schlaf-Modus der Bremsanalage 6 eine einfache Weck-Schaltung 29 die Betätigung erfasst und daraufhin die Bremsanlage 6 in einen Aufwach-Modus versetzt, der als Übergangs-Betriebsmodus dient für einen Übergang vom Schlaf-Modus in den Wach-Modus.

Im Aufwach-Modus werden dann unter anderem die beiden Bremspedal-Sensoren 24 aktiviert, so dass in der Folge im Falle einer Eingabe eines Bremsbefehls durch einen Fahrer, also bei einer Betätigung des Bremspedals 22, durch die beiden Bremspedal-Sensoren 24 elektrische Sensor-Signale generiert und an die Steuergeräte 16, 18 übermittelt werden. Außerdem wird das Hydrauliksystems 12 wieder aktiviert.

Weiterhin führt im Aufwach-Modus das sekundäre Steuergerät 18 eine Start-Prozedur aus, nämlich eine sekundäre Start-Prozedur, und versetzt hierbei den sekundären Teil der Druckregeleinrichtung 14 in einen betriebsbereiten Zustand.

Ist, so wie bevorzugt, zudem im Schlaf-Modus die Versorgung des primären Steuergeräts 16 mit elektrischer Energie deaktiviert, so wird im Aufwach-Modus durch das sekundäre Steuergerät 18 außerdem die Versorgung des primären Steuergeräts 16 mit elektrischer Energie wieder aktiviert. Alternativ wird die Versorgung des primären Steuergeräts 16 mit elektrischer Energie durch die Weck-Schaltung 29 wieder aktiviert. Auch das primäre Steuergerät 16 führt dann im Aufwach-Modus eine Start-Prozedur aus, nämlich eine sekundäre Startprozedur, und versetzt hierbei den primären Teil der Druckregeleinrichtung 14 in einen betriebsbereiten Zustand.

Sind dann beide Start-Prozeduren ausgeführt und befinden sich beide Teile der Druckregeleinrichtung 14 in dem betriebsbereiten Zustand, so wechselt die Bremsanlage 6 schließlich in den Wach-Modus.

Zur Ermittlung einer aktuellen Bremssituation weist die Bremsanlage 6 im Ausführungsbeispiel weiter vier Raddrehzahl-Sensoren 30 auf, wobei jedem Rad 4 des Kraftfahrzeugs 2 ein Raddrehzahl-Sensor 30 beigeordnet ist. Im Aufwach-Modus generieren die Raddrehzahl-Sensoren 30 Sensor-Signale und sobald das sekundäre Steuergerät 18 seine Start-Prozedur ausgeführt hat, wertet dieses die Sensor-Signale aus und ermittelt basierend auf diesen, ob eine unkritische oder eine kritische Bremssituation vorliegt. Dabei ist eine Bremssituation unkritisch, solange sich keines der Räder 4 des Kraftfahrzeugs 2 dreht und die Bremssituation wird kritisch, sobald sich zumindest eines der Räder 4 zu drehen beginnt.

Die Bremsanlage 6 ist außerdem derart eingerichtet, dass bei einer Eingabe eines Bremsbefehls noch im Aufwach-Modus das primäre Steuergerät 16 in Abhängigkeit dieses eingegebenen Bremsbefehls die Bremsvorrichtung 12 zur Generierung einer Bremskraft ansteuert, wenn eine unkritische Bremssituation vorliegt, und dass die sekundäre Steuergeräteinheit 18 in Abhängigkeit dieses eingegebenen Bremsbefehls die Bremsvorrichtung 12 zur Generierung einer Bremskraft ansteuert, wenn eine kritische Bremssituation vorliegt.

Dies ist insbesondere deshalb vorteilhaft, da bei der Bremsanlage 6 im Ausführungsbeispiel eine Ausführung der sekundären Start-Prozedur in kürzerer Zeit erfolgt als eine Ausführung der primären Start-Prozedur. Infolgedessen ist dann auch nach einem Betrieb der Bremsanlage 6 im Schlaf-Modus das sekundäre Bremssubsystem und insbesondere auch der sekundäre Teil der Druckregeleinrichtung 14 stets zu einem früheren Zeitpunkt in einen betriebsbereiten Zustand als das primäre Bremssubsystem und insbesondere auch der primäre Teil der Druckregeleinrichtung 14.

### BEZUGSZEICHENLISTE:

- 2: Kraftfahrzeug
- 4: Rad
- 6: Bremsanlage
- 8: Radbremse
- 10: Bremszylinder
- 12: Hydrauliksystem
- 14: Druckregeleinrichtung
- 16: primäres Steuergerät
- 18: sekundäres Steuergerät
- 20: Eingabevorrichtung
- 22: Bremspedal
- 24: Bremspedal-Sensor
- 26: primäre Wandler-Schaltung
- 28: sekundäre Wandler-Schaltung
- 29: Weck-Schaltung
- 30: Raddrehzahl-Sensor

## Patentansprüche

1. Bremsanlage (6) für ein Kraftfahrzeug
eingerichtet für
- einen Schlaf-Modus,
- einen Aufwach-Modus sowie
- einen Wach-Modus,
aufweisend
- eine Eingabevorrichtung (20) mit einem Bedienelement (22), über welche Bremsbefehle von einem Fahrer eingebbar sind,
- eine elektrisch steuerbare Bremsvorrichtung (12) zur Generierung von Bremskräften,
- eine Steuervorrichtung (16,18) zur Steuerung der Bremsvorrichtung (12), wobei die Steuervorrichtung (16,18) ein primäres Steuergerät (16) und ein sekundäres Steuergerät (18) aufweist, sowie
- eine Sensoreinrichtung (30) zur Generierung von Sensorsignalen, mittels derer eine Bremssituation ermittelbar ist,
und eingerichtet derart, dass im Aufwach-Modus
- die Sensorsignale der Sensoreinrichtung (30) durch die Steuervorrichtung (16,18) auswertet werden, wobei ermittelt wird, ob eine kritische oder eine unkritische Bremssituation vorliegt, und
- bei Eingabe eines Bremsbefehls das primäre Steuergerät (16) in Abhängigkeit des eingegebenen Bremsbefehls die Bremsvorrichtung (12) zur Generierung einer Bremskraft ansteuert, wenn eine unkritische Bremssituation vorliegt, und das sekundäre Steuergerät (18) in Abhängigkeit des eingegebenen Bremsbefehls die Bremsvorrichtung (12) zur Generierung einer Bremskraft ansteuert, wenn eine kritische Bremssituation vorliegt.

2. Bremsanlage (6) nach Anspruch 1,
wobei die Sensoreinrichtung (30) eine Anzahl Raddrehzahl-Sensoren (30) zur Generierung der Sensorsignale aufweist und wobei im Aufwach-Modus durch die Steuervorrichtung (16,18) basierend auf den Sensorsignalen der Raddrehzahl-Sensoren (30) ermittelt wird, ob eine kritische oder eine unkritische Bremssituation vorliegt.

3. Bremsanlage (6) nach Anspruch 1 oder 2,
wobei diese derart eingerichtet ist, dass im Aufwach-Modus das primäre Steuergerät (16) eine primäre Start-Prozedur und das sekundäre Steuergerät (18) eine sekundäre Start-Prozedur ausführt, wobei die sekundäre Start-Prozedur in kürzerer Zeit abgeschlossen ist als die primäre Start-Prozedur.

4. Bremsanlage (6) nach einem der Ansprüche 1 bis 3,
wobei diese eine Anzahl Radbremsen (8) aufweist, wobei die elektrisch steuerbare Bremsvorrichtung (12) ein elektrisch steuerbares Hydrauliksystem (12) aufweist und wobei mittels des Hydrauliksystems (12) in jeder Radbremse (8) ein hydraulischer Druck vorgebbar ist zur Generierung einer Radbremskraft.

5. Bremsanlage (6) nach Anspruch 4,
wobei das Hydrauliksystem (6) eine elektrisch steuerbare Druckregeleinrichtung (14) aufweist mit einem primären Teil und mit einen sekundären Teil, wobei der primäre Teil signaltechnisch an das primäre Steuergerät (16) angebunden ist und der sekundäre Teil an das sekundäre Steuergerät (18) und wobei einerseits mittels des primären Steuergeräts (16) sowie mittels des primären Teils der Druckregeleinrichtung (14) Radbremskräfte vorgebbar sind und andererseits mittels des sekundären Steuergeräts (18) sowie mittels des sekundären Teils der Druckregeleinrichtung (14) Radbremskräfte vorgebbar sind.

6. Bremsanlage (6) nach Anspruch 4 oder 5,
wobei auf eine mechanisch-hydraulische Rückfallebene verzichtet ist.

7. Bremsanlage (6) nach einem der Ansprüche 4 bis 6,
wobei diese derart eingerichtet ist, dass im Wach-Modus bei einer Eingabe eines Bremsbefehls das primäre Steuergerät (16) das Hydrauliksystem (12) derart ansteuert, dass in Abhängigkeit des eingegebenen Bremsbefehls ein Basisdruck in jeder Radbremse (8) hydraulisch vorgegeben wird, und dass das sekundäre Steuergerät (18) das Hydrauliksystem (12) derart ansteuert, dass im Bedarfsfall in jeder Radbremse (8) der Basisdruck individuell variiert wird.

8. Bremsanlage (6) nach Anspruch 7,
wobei diese derart eingerichtet ist, dass im Bedarfsfall in jeder Radbremse (8) der Basisdruck individuell variiert wird, um hierdurch eine ABS-Funktion und/oder eine ESP-Funktion zu realisieren.

9. Bremsanlage (6) nach einem der Ansprüche 1 bis 8,
wobei diese derart eingerichtet ist, dass in dem Schlaf-Modus das primäre Steuergerät (16) von einer Spannungsversorgung abgekoppelt ist und dass in dem Aufwach-Modus das sekundäre Steuergerät (18) das primäre Steuergerät (16) an die Spannungsversorgung wieder ankoppelt.

10. Kraftfahrzeug (2) aufweisend eine Bremsanlage (6) nach einem der vorherigen Ansprüche.
